# DEMANDE DE BREVET EUROPEEN

(11) **EP 2 268 107 A1**
(43) Date de publication de la demande: **29.12.2010**
(21) Numéro de dépôt: 10163672.8
(22) Date de dépôt: 21.05.2010
(51) Int. Cl.: H05B 39/04, H05B 33/08

(54) **Circuit de commande d'un dispositif d'éclairage à diodes électroluminescentes**

(30) Priorité: 12.06.2009 FR 0953922
(71) Demandeur: STMicroelectronics (Tours) SAS, 37100 Tours (FR)
(72) Inventeur: Gonthier, Laurent, 37000 Tours (FR); Passal, Antoine, 37100 Tours (FR)
(74) Mandataire: de Beaumont, Michel

(57) **Abrégé**

L'invention concerne un circuit adapté à recevoir, en série avec au moins une diode électroluminescente (3), une tension alternative redressée (V_{ACR}), comportant : un premier thyristor (33) ouvrable par la gâchette relié à des première (I) et seconde (J) bornes du circuit ; et un circuit de commande pour ouvrir le premier thyristor (33) lorsque la tension entre les première et seconde bornes dépasse un seuil.

## Description

### Domaine de l'invention

La présente invention concerne les dispositifs d'éclairage à diodes électroluminescentes destinés à recevoir une tension d'alimentation alternative. Elle concerne plus particulièrement les circuits d'alimentation de ces dispositifs.

### Exposé de l'art antérieur

Depuis longtemps, les dispositifs d'éclairage sont réalisés à base d'ampoules à incandescence ou de tubes fluorescents adaptés à recevoir une tension d'alimentation alternative, par exemple une tension secteur de 220 V à 50 Hz. Plus récemment, on a cherché à utiliser des diodes électroluminescentes. Ces diodes bénéficient notamment d'une durée de vie élevée et d'un rendement lumineux important. Elles requièrent toutefois un circuit d'alimentation adapté à recevoir la tension alternative du secteur.

Les circuits classiques fonctionnent en mode linéaire, c'est-à-dire qu'ils fournissent une tension continue, et une puissance adaptée aux caractéristiques électriques des diodes. Les diodes sont donc maintenues allumées pendant toute la durée de chaque alternance de la tension du secteur. Ce mode d'alimentation présente l'inconvénient de réduire leur durée de vie. En outre, les circuits d'alimentation linéaire comportent généralement des condensateurs haute tension présentant l'inconvénient d'être couteux et encombrants.

### Résumé

Un objet d'un mode de réalisation de la présente invention est de pallier tout ou partie des inconvénients des circuits d'alimentation de diodes électroluminescentes.

Un objet d'un mode de réalisation de la présente invention est de proposer un tel circuit améliorant la durée de vie des diodes.

Un objet d'un mode de réalisation de la présente invention est de proposer un tel circuit à faible coût et facile à mettre en oeuvre.

Ainsi, un mode de réalisation de la présente invention prévoit un circuit adapté à recevoir, en série avec au moins une diode électroluminescente, une tension alternative redressée, comportant : un premier thyristor ouvrable par la gâchette relié à des première et seconde bornes du circuit ; et un circuit de commande pour ouvrir le premier thyristor lorsque la tension entre les première et seconde bornes dépasse un seuil.

Selon un mode de réalisation de la présente invention, ledit circuit adapté à recevoir, en série avec au moins une diode électroluminescente, une tension alternative redressée, comporte un second thyristor reliant la gâchette du premier thyristor à ladite seconde borne ; et un premier élément résistif reliant la gâchette du premier thyristor à ladite première borne ou à une borne d'application de la tension alternative redressée.

Selon un mode de réalisation de la présente invention, ledit circuit adapté à recevoir, en série avec au moins une diode électroluminescente, une tension alternative redressée, comporte, en série avec le premier thyristor, un pont diviseur de tension pour fixer ledit seuil, le point milieu du pont diviseur étant relié à une gâchette du second thyristor.

Selon un mode de réalisation de la présente invention, ledit circuit adapté à recevoir, en série avec au moins une diode électroluminescente, une tension alternative redressée, comporte en outre un circuit de stockage temporaire d'énergie entre le point milieu du pont diviseur et ladite gâchette du second thyristor.

Selon un mode de réalisation de la présente invention, ledit circuit de stockage comporte : un deuxième élément résistif en série avec un élément capacitif de stockage, reliant ladite gâchette du second thyristor à ladite seconde borne ; et une diode reliant le point milieu du pont diviseur à ladite gâchette du second thyristor.

Selon un mode de réalisation de la présente invention, la résistivité dudit pont diviseur est faible par rapport à la résistivité du premier élément résistif.

Selon un mode de réalisation de la présente invention, un élément capacitif d'atténuation des perturbations électromagnétiques est connecté entre lesdites première et seconde bornes.

Selon un mode de réalisation de la présente invention, le premier thyristor est maintenu fermé au début de chaque alternance de ladite tension alternative redressée, pendant une période comprise entre 5% et 30% de la durée de ladite alternance.

Un mode de réalisation de la présente invention prévoit en outre un dispositif d'éclairage destiné à recevoir une tension alternative comportant : un pont de redressement de la tension alternative ; au moins une diode électroluminescente ; et un circuit adapté à recevoir, en série avec au moins une diode électroluminescente, une tension alternative redressée, selon l'un quelconque des modes de réalisation susmentionnés, connecté en série avec ladite au moins une diode électroluminescente, entre des bornes de sortie dudit pont de redressement.

Selon un mode de réalisation de la présente invention, ledit circuit adapté à recevoir, en série avec au moins une diode électroluminescente, une tension alternative redressée, forme un dipôle.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente de façon schématique un dispositif d'éclairage à diodes électroluminescentes ;
la figure 2 représente le schéma électrique simplifié du dispositif d'éclairage de la figure 1 ;
la figure 3 représente un schéma électrique plus détaillé du dispositif d'éclairage de la figure 1 ; et
les figures 4A à 4G sont des chronogrammes schématiques illustrant le fonctionnement du dispositif d'éclairage de la figure 3.

### Description détaillée

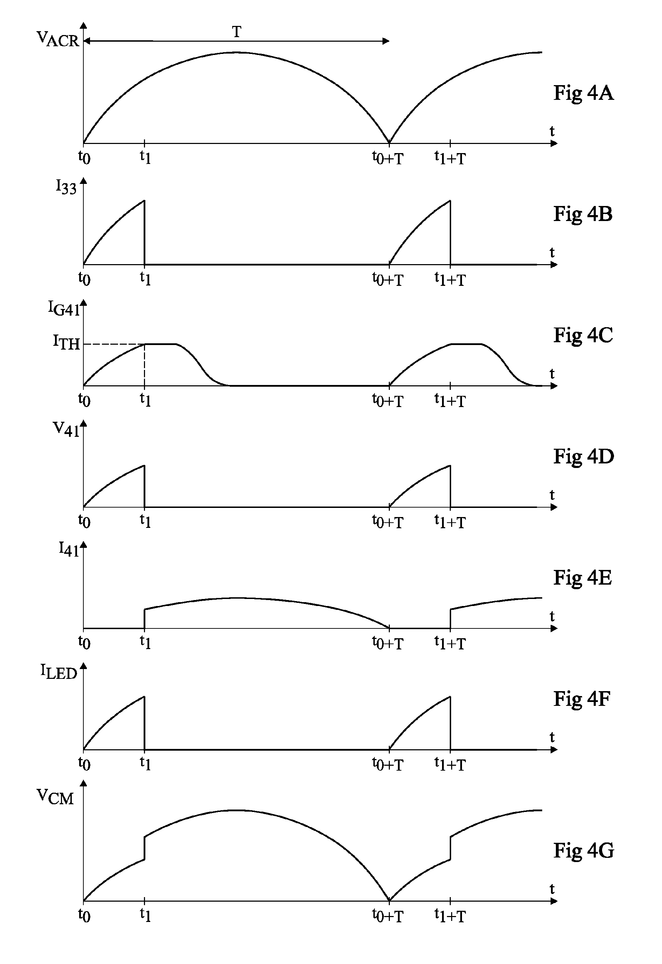

Par souci de clarté, de mêmes éléments ont été désignés par de mêmes références aux différentes figures. En outre, les chronogrammes des figures 4A à 4G ne sont pas à l'échelle.

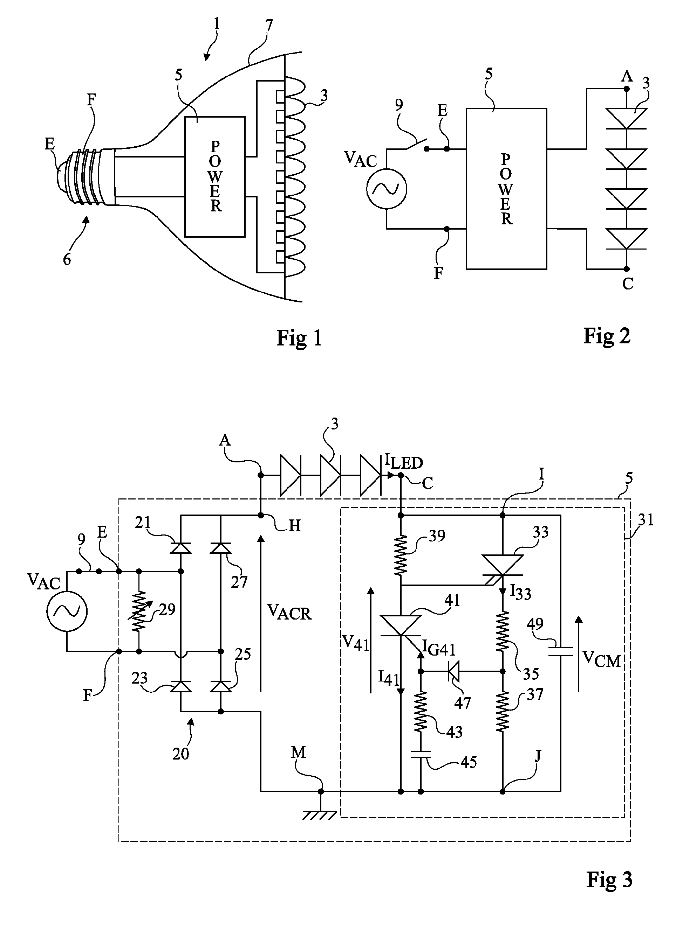

La figure 1 est une vue schématique d'un dispositif 1 d'éclairage à diodes électroluminescentes 3.
La figure 2 est un schéma électrique simplifié du dispositif 1.

Le dispositif 1 comporte un ensemble de diodes électroluminescentes 3 en série. Les bornes A et C (figure 2) de l'ensemble de diodes 3 sont reliées à un circuit d'alimentation 5 (POWER). Dans l'exemple représenté, les bornes A et C correspondent respectivement aux bornes de connexion d'anode et de cathode de l'ensemble de diodes 3 en série.

Le circuit 5 est adapté à recevoir une tension alternative V_{AC} (figure 2), par exemple la tension du secteur, et à fournir une puissance adaptée aux caractéristiques électriques de l'ensemble de diodes 3. Des bornes d'entrée du circuit d'alimentation 5 sont reliées à des bornes E et F d'un culot 6. Le culot 6 peut avoir n'importe quelle forme adaptée à une connexion sur une douille, par exemple un pas de vis. D'autres raccordements peuvent être prévus, par exemple un raccordement direct par fils à un connecteur d'alimentation. L'ensemble du dispositif est monté dans un boitier 7 ne laissant accessible que le culot 6 et les diodes 3. Un verre transparent, non représenté, peut protéger les diodes 3.

Il est généralement prévu un interrupteur 9, par exemple entre une borne d'application de phase de la tension secteur V_{AC} et la borne E du culot 6, pour commander la mise sous tension du dispositif 1. L'interrupteur 9 pourra correspondre à un interrupteur mural actionnable par un utilisateur.

Pour améliorer la durée de vie et le rendement des diodes, il est proposé de les maintenir allumées uniquement pendant une fraction de chaque période de la tension du secteur, suffisante, en rapport avec les caractéristiques de rémanence de l'oeil, pour garantir un éclairage stable.

Ainsi, un aspect d'un mode de réalisation de la présente invention est de proposer un circuit d'alimentation adapté à fournir un signal de commande impulsionnel, la puissance électrique reçue par les diodes dépendant de la durée de l'impulsion.

La figure 3 est un schéma électrique d'un mode de réalisation du dispositif d'éclairage de la figure 2 représentant de façon plus détaillée le circuit d'alimentation 5.

Les bornes E et F du culot sont connectées à des bornes d'entrée alternative d'un pont 20 redresseur double alternance adapté à fournir, entre des bornes de sortie haute H et basse M, une tension alternative redressée V_{ACR}. La borne M correspond par exemple à la borne de potentiel de référence du circuit, ou masse. Dans l'exemple représenté, le pont 20 comporte quatre diodes 21, 23, 25, et 27.

Dans cet exemple, le circuit d'alimentation 5 comporte par ailleurs un dipôle ou circuit de commande 31 connecté, en série avec l'ensemble de diodes 3, entre les bornes H et M de sortie du pont redresseur 20. La borne A de l'ensemble de diodes 3 est reliée à la borne H. Les bornes I et J du dipôle 31 sont respectivement connectées à la borne C de l'ensemble de diodes 3 et à la borne M.

Le circuit 31 comporte un thyristor 33 ouvrable par la gâchette dont l'anode est connectée à la borne I. Un pont diviseur de tension constitué, par exemple, de deux résistances 35 et 37 en série, est connecté entre la cathode du thyristor 33 et la borne J. Une résistance 39, de forte valeur par rapport aux résistances 35 et 37, est connectée entre l'anode et la gâchette du thyristor 33. La résistance 39 sert à rendre passant le thyristor 33 au début de chaque alternance de la tension V_{ACR}. Un thyristor 41 à gâchette de cathode, est connecté en direct entre la gâchette du thyristor 33 et la borne J pour commander à l'ouverture le thyristor 33. Le pont diviseur de tension conditionne la mise en conduction du thyristor 41.

Pour le cas où le thyristor 41 ne serait pas suffisamment rapide, on prévoit de préférence un circuit de stockage temporaire d'énergie. Ce circuit comporte par exemple une résistance 43 connectée, en série avec une capacité 45, entre la gâchette du thyristor 41 et la borne J, et une diode 47 connectée en direct entre le point milieu du pont diviseur de tension et la gâchette du thyristor 41.

Optionnellement, une capacité 49 relie la borne I à la borne J, pour atténuer les perturbations électromagnétiques liées aux commutations des thyristors 33 et 41.

Le circuit d'alimentation 5 peut en outre comporter, entre ses bornes d'entrée E et F, une varistance 29 de protection contre des surtensions éventuelles.

A titre d'exemple particulier de réalisation :
les résistances 37 et 43 sont de l'ordre de quelques dizaines d'Ω, par exemple de l'ordre de 10 Ω ;
la résistance 35 est de l'ordre de quelques centaines d'Ω, par exemple de l'ordre de 250 Ω ;
la résistance 39 est de l'ordre de quelques dizaines de kΩ, par exemple de l'ordre de 75 kΩ ;
la capacité 45 est de l'ordre de quelques centaines de nF, par exemple de l'ordre de 100 nF ; et
la capacité 49 est de l'ordre de quelques dizaines de nF, par exemple de l'ordre de 10 nF.

Les figures 4A à 4G sont des chronogrammes schématiques représentant des exemples d'évolution des tensions et courants en différents points du dispositif d'éclairage de la figure 3. La figure 4A représente l'évolution de la tension alternative redressée V_{ACR}. La figure 4B représente l'évolution du courant I₃₃ circulant dans le thyristor 33. La figure 4C représente l'évolution du courant I_{G41} circulant entre la gâchette de cathode et la cathode du thyristor 41. La figure 4D représente l'évolution de la tension V₄₁ aux bornes du thyristor 41. La figure 4E représente l'évolution du courant I₄₁ circulant dans le thyristor 41. La figure 4F représente l'évolution du courant I_{LED} circulant dans l'ensemble de diodes 3. La figure 4G représente l'évolution de la tension V_{CM} entre les bornes C et M.

On suppose un régime établi, c'est-à-dire que l'interrupteur 9 est fermé.

A un instant t0 de début d'une alternance de la tension V_{ACR}, le thyristor 41 est ouvert. Un courant circule dans les diodes 3, la résistance 39, la gâchette du thyristor 33 et les résistances 35 et 37. Le thyristor 33 entre donc en conduction. Il s'établit donc un chemin de conduction entre la borne A et la masse, passant par l'ensemble de diodes 3, le thyristor 33, et les résistances de faible valeur 35 et 37 du pont diviseur de tension. Les diodes s'allument. Le courant I_{LED} est alors égal au courant I₃₃.

A partir de l'instant t0, le courant I_{G41} de gâchette du thyristor 41 croît proportionnellement au courant I₃₃, à un facteur près dépendant notamment de la valeur des résistances 35 et 37 du pont diviseur de tension. Il circule en outre, entre la cathode de la diode 47 et la borne M, un courant de charge de la capacité 45. La tension V₄₁ aux bornes du thyristor 41 est égale à la tension redressée V_{ACR} moins la chute de tension provoquée par l'ensemble de diodes 3 et par la résistance 39. La tension V_{CM} est égale à la tension redressée V_{ACR} moins la chute de tension de l'ensemble de diodes 3.

A un instant t1, le courant I_{G41} atteint un seuil I_{TH} de déclenchement du thyristor 41. La fermeture du thyristor 41 ramène la gâchette du thyristor 33 à la masse (V₄₁ = 0 V), provoquant son ouverture. Le courant I₃₃ circulant dans le thyristor 33 devient donc nul. Il existe alors un chemin de conduction entre la borne A de l'ensemble de diodes 3 et la borne M, passant par l'ensemble de diodes 3, la résistance 39, et le thyristor 41. A l'instant t1, le courant I_{LED} devient égal au courant I₄₁. La valeur de la résistance 39 est choisie suffisamment élevée pour que ce courant soit très faible (il est représenté comme nul sur la figure 4F). Ainsi, les diodes 3 s'éteignent sensiblement à l'instant t1. Les valeurs des résistances 35 et 37 du pont diviseur de tension définissent le seuil de la tension V_{ACR} pour lequel le courant I_{G41} atteint le seuil I_{TH} de déclenchement du thyristor 41. Les valeurs des résistances 35 et 37 sont par exemple choisies de façon que la durée d'allumage des diodes 3 soit comprise entre 5% et 30% de la durée T d'une alternance de la tension redressée V_{ACR}. Par ailleurs, à l'instant t1, la tension V_{CM} est brusquement ramenée à la valeur de la tension V_{ACR} (en négligeant la chute de tension dans les diodes 3 par rapport à la chute de tension dans la résistance 39).

Pour garantir l'amorçage du thyristor 41, la capacité 45 maintient un courant I_{G41} non nul pendant une durée après l'instant t1.

Le thyristor 41 reste conducteur jusqu'à ce que le courant qui le traverse s'annule, c'est-à-dire jusqu'à l'instant t0+T de fin de l'alternance. Ainsi, les diodes 3 sont maintenues éteintes entre les instants t1 et t0+T.

Lors d'un régime transitoire de fermeture de l'interrupteur 9, cette fermeture peut intervenir à un instant quelconque de l'alternance. Le thyristor 33 devient passant à cet instant mais le courant I_{G41} atteint immédiatement le seuil I_{TH} de déclenchement du thyristor 41, provoquant l'ouverture du thyristor 33 et l'extinction des diodes 3 jusqu'au début de la prochaine alternance. Cela permet que les diodes voient à leurs bornes une tension proche du maximum de la tension secteur pendant une durée très brève évitant ainsi leur destruction. La protection des diodes est donc assurée.

L'utilisation d'un pont redresseur double alternance conduit à ce que la fréquence des impulsions de commande des diodes est égale au double de la fréquence de la tension alternative d'alimentation. Une telle fréquence est suffisante pour s'affranchir d'éventuels effets de scintillement avec une tension secteur de 50 Hz ou 60 Hz.

Un avantage du circuit proposé est qu'il est peu couteux, peu encombrant, et facile à réaliser.

Pour réaliser un circuit d'alimentation adapté à fournir un signal de commande impulsionnel, on aurait pu penser utiliser, à la place du thyristor 33 ouvrable par la gâchette, un thyristor à fermeture commandée par la gâchette. Il faudrait alors fermer ce thyristor à un instant proche de la fin de chaque alternance de la tension redressée, les diodes restant allumées sensiblement jusqu'à la fin de chaque alternance. Toutefois, des pics de tension parasites peuvent apparaître, notamment au moment de la fermeture de l'interrupteur 9. De tels pics seraient susceptibles de déclencher la fermeture du thyristor d'allumage des diodes. Dans ce cas, les diodes resteraient allumées sensiblement jusqu'à la fin de l'alternance. Si la fermeture de l'interrupteur 9 avait lieu, par exemple, au début d'une alternance, les diodes recevraient une puissance bien supérieure à celle pour laquelle elles ont été prévues, ce qui provoquerait leur destruction.

Des modes de réalisation particuliers de la présente invention ont été décrits. Diverses variantes et modifications apparaîtront à l'homme de l'art. En particulier, l'invention s'applique quelle que soit la tension alternative d'alimentation disponible. En outre, le nombre de diodes électroluminescentes et leur connexion peuvent varier.

De plus, le dispositif d'éclairage peut comporter une fonction de gradateur en remplaçant l'une des résistances du pont diviseur de tension par une résistance variable.

Par ailleurs, dans le circuit décrit en relation avec la figure 3, les bornes A et C de l'ensemble de diodes électroluminescentes sont connectées respectivement à la borne H, correspondant à la borne haute de la tension d'alimentation redressée, et la borne I d'anode du thyristor 33 ouvrable par la gâchette. Selon une variante de réalisation, la résistance 37 n'est plus directement reliée à la borne M mais l'est par l'intermédiaire de l'ensemble de diodes 3. Selon une autre variante, la résistance 39 n'est plus connectée à la borne C mais à la borne H. Ces variantes sont combinables.

## Revendications

1. Circuit adapté à recevoir, en série avec au moins une diode électroluminescente (3), une tension alternative redressée (V_{ACR}), comportant :
un premier thyristor (33) ouvrable par la gâchette relié à des première (I) et seconde (J) bornes du circuit ; et
un circuit de commande pour ouvrir le premier thyristor (33) lorsque la tension entre les première et seconde bornes dépasse un seuil.

2. Circuit selon la revendication 1, comportant :
un second thyristor (41) reliant la gâchette du premier thyristor (33) à ladite seconde borne (J) ; et
un premier élément résistif (39) reliant la gâchette du premier thyristor à ladite première borne (I) ou à une borne (H) d'application de la tension alternative redressée.

3. Circuit selon la revendication 2, comportant, en série avec le premier thyristor (33), un pont diviseur de tension (35, 37) pour fixer ledit seuil, le point milieu du pont diviseur étant relié à une gâchette du second thyristor (41).

4. Circuit selon la revendication 3, comportant en outre un circuit (43, 45, 47) de stockage temporaire d'énergie entre le point milieu du pont diviseur et ladite gâchette du second thyristor (41).

5. Circuit selon la revendication 4, dans lequel ledit circuit de stockage comporte :
un deuxième élément résistif (43) en série avec un élément capacitif de stockage (45), reliant ladite gâchette du second thyristor (41) à ladite seconde borne (J) ; et
une diode reliant le point milieu du pont diviseur (35, 37) à ladite gâchette du second thyristor (41).

6. Circuit selon l'une quelconque des revendications 3 à 5, dans lequel la résistivité dudit pont diviseur (35, 37) est faible par rapport à la résistivité du premier élément résistif (39).

7. Circuit selon l'une quelconque des revendications 1 à 6, dans lequel un élément capacitif (49) d'atténuation des perturbations électromagnétiques est connecté entre lesdites première (I) et seconde (J) bornes.

8. Circuit selon l'une quelconque des revendications 1 à 7, dans lequel le premier thyristor (33) est maintenu fermé au début de chaque alternance de ladite tension alternative redressée, pendant une période comprise entre 5% et 30% de la durée de ladite alternance.

9. Dispositif d'éclairage destiné à recevoir une tension alternative (V_{AC}) comportant :
un pont (20) de redressement de la tension alternative (V_{AC}) ;
au moins une diode électroluminescente (3) ; et
un circuit (31) selon l'une quelconque des revendications 1 à 8, connecté en série avec ladite au moins une diode électroluminescente, entre des bornes (H, M) de sortie dudit pont de redressement (20).

10. Dispositif d'éclairage selon la revendication 9, dans lequel ledit circuit (31) forme un dipôle.

## Revendications modifiées

### Revendications modifiées conformément à la règle 137(2) CBE.

**1.** Circuit comportant :
des première (I) et seconde (J) bornes adaptées à recevoir, en série avec au moins une diode électroluminescente (3), une tension alternative redressée (V_{ACR}) ;
un premier thyristor (33) ouvrable par la gâchette relié aux première (I) et seconde (J) bornes du circuit ; et
un circuit de commande pour ouvrir le premier thyristor (33) lorsque la tension entre les première et seconde bornes dépasse un seuil.

**2.** Circuit selon la revendication 1, comportant :
un second thyristor (41) reliant la gâchette du premier thyristor (33) à ladite seconde borne (J) ; et
un premier élément résistif (39) reliant la gâchette du premier thyristor à ladite première borne (I) ou à une borne (H) d'application de la tension alternative redressée.

**3.** Circuit selon la revendication 2, comportant, en série avec le premier thyristor (33), un pont diviseur de tension (35, 37) pour fixer ledit seuil, le point milieu du pont diviseur étant relié à une gâchette du second thyristor (41).

**4.** Circuit selon la revendication 3, comportant en outre un circuit (43, 45, 47) de stockage temporaire d'énergie entre le point milieu du pont diviseur et ladite gâchette du second thyristor (41).

**5.** Circuit selon la revendication 4, dans lequel ledit circuit de stockage comporte :
un deuxième élément résistif (43) en série avec un élément capacitif de stockage (45), reliant ladite gâchette du second thyristor (41) à ladite seconde borne (J) ; et
une diode reliant le point milieu du pont diviseur (35, 37) à ladite gâchette du second thyristor (41).

**6.** Circuit selon l'une quelconque des revendications 3 à 5, dans lequel la résistivité dudit pont diviseur (35, 37) est faible par rapport à la résistivité du premier élément résistif (39).

**7.** Circuit selon l'une quelconque des revendications 1 à 6, dans lequel un élément capacitif (49) d'atténuation des perturbations électromagnétiques est connecté entre lesdites première (I) et seconde (J) bornes.

**8.** Circuit selon l'une quelconque des revendications 1 à 7, dans lequel le premier thyristor (33) est maintenu fermé au début de chaque alternance de ladite tension alternative redressée, pendant une période comprise entre 5% et 30% de la durée de ladite alternance.

**9.** Dispositif d'éclairage destiné à recevoir une tension alternative (V_{AC}) comportant :
un pont (20) de redressement de la tension alternative (V_{AC}) ;
au moins une diode électroluminescente (3) ; et
un circuit (31) selon l'une quelconque des revendications 1 à 8, connecté en série avec ladite au moins une diode électroluminescente, entre des bornes (H, M) de sortie dudit pont de redressement (20).

**10.** Dispositif d'éclairage selon la revendication 9, dans lequel ledit circuit (31) forme un dipôle.
